# EUROPÄISCHE PATENTANMELDUNG

(11) **EP 4 293 311 A1**
(43) Veröffentlichungstag der Anmeldung: **20.12.2023**
(21) Anmeldenummer: 22179011.6
(22) Anmeldetag: 14.06.2022
(51) Int. Cl.: F41G 3/04, F41G 7/22, F41G 3/06, F41G 3/14, G01S 13/86, G01S 13/58, G01S 13/72, F41H 11/02, G06N 7/00, G06N 7/01

(54) **STEUERVORRICHTUNG EINES WAFFENSYSTEMS UND WAFFENSYSTEM**

(71) Anmelder: 21strategies GmbH, 85399 Hallbergmoos (DE)
(72) Erfinder: Brandlhuber, Christian, 85406 Zolling (DE); Hofstetter, Yvonne, 85406 Zolling (DE); Muller, Scott John, 10437 Berlin (DE)
(74) Vertreter: Hoefer & Partner Patentanwälte mbB

(57) **Zusammenfassung**

Die Erfindung betrifft eine Steuervorrichtung eines Waffensystems aufweisend eine Eingangsschnittstelle zur Kommunikation mit zumindest einem Umgebungssensor und/oder zum Empfangen von Eingangsdaten, eine Ausgangsschnittstelle zur Kommunikation mit zumindest einem Effektor, und eine Recheneinheit, wobei die Recheneinheit ausgebildet ist, mehrere verschiedene Agenten (5, 6, 7, 8) parallel und unabhängig voneinander auszuführen, wobei die Agenten (5, 6, 7, 8) umfassen zumindest einen Sensormanagement-Agent (5) ausgebildet zum Ansteuern eines über die Eingangsschnittstelle verbundenen Umgebungssensors, und/oder zumindest einen informationsverarbeitenden Agenten (6, 7) ohne zugeordnete zu steuernde Komponenten, und/oder zumindest einen Effektormanagement-Agent (8) ausgebildet zum Ansteuern eines über die Ausgangsschnittstelle verbundenen Effektors, wobei die Recheneinheit außerdem ausgebildet ist, eine Effektbewertung (9) durchzuführen und das Ergebnis den Agenten (5, 6, 7, 8) zur Verfügung zu stellen, und wobei die Agenten (5, 6, 7, 8) ausgebildet sind, durch ihr Verhalten die Effektbewertung (9) zu maximieren oder minimieren.

## Beschreibung

Die Erfindung betrifft eine Steuervorrichtung eines Waffensystems sowie ein Waffensystem.

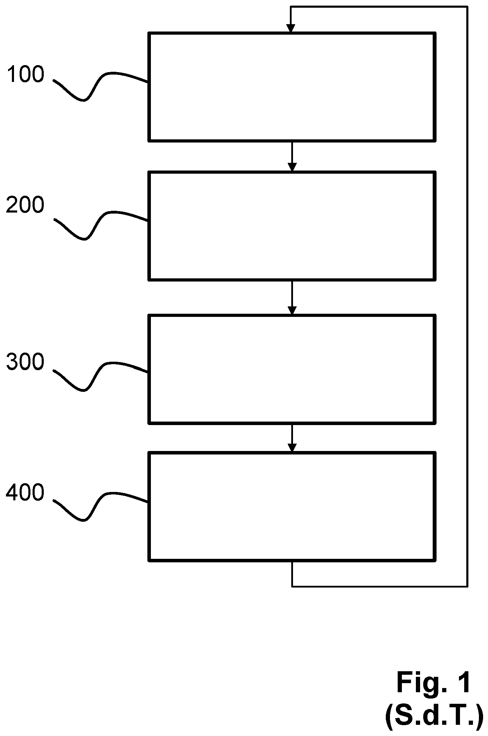

Zum gegenwärtigen Stand der Technik wird die Feuerleitung in Luftverteidigungssystemen und Luftverteidigungsverbundes strikt sequenziell nach den Vorgaben eines Ablaufschemas orchestriert, das als OODA Loop (Observe-Orient-Decide-Act; Beobachten-Bewerten-Entscheiden-Handeln) bezeichnet wird. Ein solches Ablaufschema ist schematisch in Figur 1 gezeigt. Dabei werden in einem Beobachten-Schritt 100 (Observe) Daten aus einem oder mehreren potenziell nicht-kommensurablen Sensoren und Informationsquellen, wie etwa bereits vorverarbeitete Daten über das aktuelle Luftlagebild, erhoben und kombiniert, um in einem nachfolgenden Bewerten-Schritt 200 (Orient) eine möglichst genaue Bestimmung der Eigenlage vornehmen zu können. Im Rahmen eines Entscheiden-Schrittes 300 (Decide) erfolgt eine Bestätigung des Ziels oder der Ziele, um dann in einem Handeln-Schritt 400 (Act) eine Zuweisung, Ausrichtung und Einsatz der Effektoren vornehmen zu können. Die Berechnungsabfolge eines OODA Schrittes 100, 200, 300, 400 muss dabei als Verarbeitungspipeline betrachtet werden bei der alle Schritte 100, 200, 300, 400 nacheinander ausgeführt werden. Das OODA Ablaufschema wird oft auch als erweiterter "Scan-Zyklus" bezeichnet, der innerhalb einer vordefinierten Zeitspanne abgearbeitet sein muss.

Das sequenzielle Abarbeitungsschema der OODA Loop bringt folgende Nachteile mit sich: Der Effektor wird faktisch durch den Sensor gesteuert. Der Sensor bzw. dessen nachfolgende Zielverfolgungssoftware (Tracker) versuchen zunächst die Flugspur eines Zieles aufzubauen und möglichst genau zu vermessen, wozu mehrere Zyklen notwendig sind. Wenn eine hinreichend präzise Messung vorliegt wird der Effektor ausgelöst. Im praktischen Einsatz führt dies dazu, dass in der Bekämpfungsphase die Aufmerksamkeit des Systems auf ein oder wenige Objekte konzentriert ist. Dies kann vom Gegner taktisch dazu genutzt werden, die Aufmerksamkeit des Abwehrsystems z.B. durch den Einsatz unbemannter Systeme auf eine vorgetäuschte Aktionen zu ziehen, während der eigentliche Angriff auf das Abwehrsystem aus einem anderen Winkel vorgenommen wird. Ein Abbruch eines aktuell laufenden OODA Loops sowie die Fokussierung auf das vorgetäuschte Ziel müsste gemäß dem Stand der Technik von außen erfolgen, beispielsweise durch einen Bediener oder eine übergeordnete langsamere Kommandokette. Speziell bei schnell anfliegenden Bedrohungen wie z.B. Lenkflugkörper ist die dadurch entstehende Latenz zu groß um das System noch effektiv verteidigen zu können, was zum Verlust des Systems führen kann.

Ein weiterer Nachteil des OODA Schemas besteht darin, dass gemäß dem Pipelining Prinzip jeder Verarbeitungsschritt im Zyklus jeweils auf die Endergebnisse des jeweils vorangehenden Schrittes angewiesen ist. Dies kann sich als nachteilig bei der Bekämpfung von Drohnenschwärmen, und speziell von Drohnenschwärmen mit evasivem Verhalten erweisen. In diesem Fall werden einerseits aufgrund der Sensorauflösung nahe zusammenfliegende Drohnen ("pack") bisweilen als ein Objekt wahrgenommen. Teilt sich das Pack bzw. vereinen sich Teile daraus wieder zu neuen Gruppen können bisherige Flugspuren nicht mehr den neuen Sensordaten zugeordnet werden. In Folge führt dies zum Verlust der Flugspur ("drop-track") und es müssen neue Flugspuren aufgebaut werden ("initialize track"). Da der jeweilige Entscheiden-Schritt 300 und Handeln-Schritt 400 (Decide/Act) des Zyklus auf die Existenz eines bestätigten Tracks aufbauen, kann dies bei taktisch klugem Verhalten der Drohnenlogik dazu führen, dass das Luftverteidigungssystem in eine andauernde "drop-track" - "initialize track" Schleife gezwungen wird, was eine Abwehr unmöglich macht und zum Verlust des Abwehrsystems bzw. des von ihm geschützten Objektes führen kann.

In der Praxis operieren Flugabwehrsysteme typischerweise in einem Verbund (oft auch als Integrated Air Defense System IADS oder, spezieller, Ground Based Air Defense Cluster GBAD bezeichnet). Die Systeme werden dabei typischerweise von einer zentralen Instanz (Command and Control, C2 Komponente) koordiniert, die an zusätzliche Sensoren angebunden ist, um z.B. eine Weitbereichsüberwachung zu ermöglichen. In diesem Verbund erfolgt die Zielzuweisung an ein Flugabwehrsystem über die C2 Komponente per Daten oder Sprachfunkübertragung. Speziell in Situationen, in denen es zu unmittelbaren Angriffen auf Luftverteidigungssysteme und damit zu Selbstverteidigungssituationen kommt kann die Zielzuweisung zu Zielkonflikten mit der lokalen Verteidigungssituation führen, deren Auflösung wiederum zu Latenzen führt, die für eine effektive Abwehr nicht tauglich sind.

Die meisten der aufgeführten Probleme beruhen darauf, dass das Konzept der OODA Loop einen Regelkreis beschreibt, der in seiner Wirkung rein reaktiv ausgerichtet ist. Es ist Aufgabe der Erfindung, die aufgeführten Probleme zu vermeiden oder zumindest abzumindern. Da sich die Bedrohungslage in einer Situation sukzessive entwickelt und u.a. von Verfügbarkeit, Positionierung und Aktionen eigener Kräfte mit folgender Reaktion des Gegners abhängt und insbesondere der Aufbau des Lagebildes über die Sensorik immer mit einer physikalisch/ verfahrensabhängigen Latenz (z.B. zum Aufbau für eine Bekämpfung hinreichend genauer Flugspuren) einhergeht, ist insbesondere Aufgabe der Erfindung eine optimierte Regelung bereitzustellen, die systemisch (a) eine vorausschauendes/ antizipatives Fähigkeit, (b) die Fähigkeit zur Optimierung des eigenen Ressourceneinsatzes und der Fokussierung auf die wichtigsten/ aktuell gefährlichsten Ziele, und (c) die Fähigkeit einer situativen Selbst-Reorganisation des Systemverbundes zur Reduzierung von Latenzzeiten ermöglicht.

Die Lösung dieser Aufgabe erfolgt durch die unabhängigen Ansprüche. Die abhängigen Ansprüche haben bevorzugte Weiterbildungen der Erfindung zum Inhalt.

Die erfindungsgemäße Steuervorrichtung eines Waffensystems weist eine Eingangsschnittstelle, eine Ausgangsschnittstelle sowie eine Recheneinheit auf. Die Eingangsschnittstelle dient zur Kommunikation mit zumindest einem Umgebungssensor und/oder zum Empfangen von Eingangsdaten. Durch den Umgebungssensor ist der Steuervorrichtung ermöglicht, eine Umgebung abzutasten, um eine aktuelle Lage zu bestimmen. Alternativ oder zusätzlich können mittels der Eingangsschnittstelle Umgebungsinformationen und/oder Lageinformationen via Datenlink empfangen werden. Bei den Lageinformationen handelt es sich insbesondere um Luftlageinformationen und/oder Bodenlageinformationen oder Seelageinformationen Die Ausgangsschnittstelle dient zur Kommunikation mit zumindest einem Effektor.

Die Recheneinheit ist ausgebildet, mehrere verschiedene Agenten parallel und unabhängig voneinander auszuführen. Bei den Agenten handelt es sich insbesondere um Software-Agenten, d.h. um Computerprogramme, die zu einem eigenständigen und eigendynamischen Verhalten vorgesehen sind. Durch das parallele Ausführen der Agenten auf der Recheneinheit können diese Agenten Aufgaben unabhängig voneinander wahrnehmen. Im Vergleich zum oben beschriebenen Stand der Technik wird somit grundsätzlich die Systemarchitektur des OODA Loop aufgelöst und die Einzelfunktionen in eigenständige, nebenläufige Prozesse, d.h. besagte Agenten aufgeteilt. Bevorzugt verfügt jeder Agent über einen eigenen Berechnungs-Loop. Jeder Agent hat somit eine eigene Aufgabe, die dieser ausführt.

Die Agenten umfassen zumindest einen Sensormanagement-Agent und/oder zumindest einen informationsverarbeitenden Agenten und/oder zumindest einen Effektormanagement-Agent, wobei zumindest zwei Agenten vorgesehen sind. Ein Sensormanagement-Agent ist ausgebildet zum Ansteuern eines über die Eingangsschnittstelle verbundenen Umgebungssensors. Ein Effektormanagement-Agent ist ausgebildet zum Ansteuern eines über die Ausgangsschnittstellt verbundenen Effektors. Ein informationsverarbeitender Agent dient der reinen Informationsverarbeitung und weist keine zugeordnete zu steuernde Komponenten auf.

Die Recheneinheit ist bevorzugt ausgebildet, eine Effektbewertung durchzuführen und das Ergebnis den Agenten zur Verfügung zu stellen. Die Effektbewertung umfasst bevorzugt einen Belohnungsanteil und/oder einen Strafanteil. Dies wird auch "reward signal" genannt, das als Zielfunktion abgebildet ist. Wird beispielsweise auf ein Objekt effektiv eingewirkt, so ergibt sich eine Belohnung, wobei ein Eindringen eines Objekts in einen vordefinierten geschützten Bereich zu einer Strafe führt. Die Agenten sind ausgebildet, durch ihr Verhalten die Effektbewertung zu maximieren oder minimieren. Insbesondere sind die Agenten ausgebildet, Belohnungen zu maximieren und/oder Strafen zu minimieren. Die Agenten können untereinander Daten bevorzugt über einen gemeinsamen Speicher oder andere Methoden austauschen. Ein Abwarten der Ergebnisse aus dem letzten Scan-Zyklus und damit ein Abwarten auf den Abschluss des letzten Scan-Zyklus wie beim OODA-Loop erfolgt indes nicht. Die Recheneinheit ist somit derart ausgebildet, dass die Informationspropagierung der "Sensor-zu-Effektor" Verarbeitung nicht als Pipeline, d.h. eine Kette aufeinanderfolgender Schritte, wobei jeder Schritt vom Ergebnis des vorherigen abhängig ist, erfolgt.

Die Agenten kommunizieren stattdessen ihre Ergebnisse ad-hoc durch asynchrone Datenkommunikation. Jeder Agent nutzt die aktuell lokal vorliegende Datenlage zur Optimierung seines weiteren Verhaltens, was einerseits die Ansteuerung der ihm zugeordneten Sensorressourcen und/oder Effektorresourcen beinhaltet, aber auch ob, wann und welche Information an andere Agenten weiterkommuniziert wird. Die Agenten lernen dadurch welche Effekte sie durch direkte Ansteuerung von Sensorressourcen und/oder Effektorressourcen erzielen können und welche Effekte sich durch Informationsweitergabe oder Aufgabendelegation an andere Agenten erzielen lassen. Dadurch ist ein emergentes Systemverhalten erreicht. Im Zusammenspiel der erlernten Interaktion der Agenten untereinander sowie mit Sensoren und/oder Effektoren entsteht ein situativ angepasstes und ausbalanciertes Verhalten des Gesamtsystems. So kann in einem Waffensystem beispielsweise das Risiko einer zu frühen Entdeckung aufgrund eigener Abstrahlung aktiver Sensoren mit der Erfolgswahrscheinlichkeit ein angreifendes Objekt unmittelbar abzuwehren abgeglichen werden. Das so entstehende Systemverhalten stellt insbesondere optimierte Kompromisse zwischen Fokussierung von Sensorressourcen und/oder Effektorressourcen dar, wodurch ad-hoc auftretender Bedrohungen erkannt werden. Die erlernten Kommunikationsmuster führen insbesondere dazu, dass sich situationsspezifisch angepasste Softwareverschaltungen bilden, die die Anzahl der Durchlaufschritte vom Sensor zum Effektor minimieren und damit die "Sensor-zu-Effektor" Latenz entscheidend verkürzt. Da die jeweiligen Agenten, z.B. der Effektorsteuerung keine direkte Abhängigkeit von anderen Agenten aufweisen, ist die Steuervorrichtung robust und kann schnell auf geänderte Situationen reagieren. Während im Stand der Technik, insbesondere wie oben beschrieben, Ablaufprozesse als Workflow mit festen Regeln implementiert sind, ist es der Steuervorrichtung durch den beschriebenen Aufbau ermöglicht, Ablaufprozesse situationsabhängig zu reorganisieren, was bei Workflows mit festen Regeln nicht möglich ist.

Die Steuervorrichtung ermöglicht eine verkürzte Sensor-zu-Effektor Latenzzeit. Außerdem ermöglicht die Steuervorrichtung aufgrund der Agenten vorhandene Fähigkeit Ziele zu repriorisieren und sich auf schnell verändernde Lagen schneller anzupassen, als dies durch einen manuellen Eingriff durch einen Bediener möglich wäre. Durch ihre vorteilhafte dynamisch adaptive Sensor-Effektor Zuordnung und ihre vorteilhafte Trackunabhängigkeit ist die Steuervorrichtung außerdem bevorzugt in der Lage, beispielsweise gegen Drohnenschwärme effektiv zu wirken und damit Schutz vor Massenangriffen, auch Attrition Attacks genannt, durch Schwärme zu ermöglichen.

Bevorzugt weist zumindest ein Agent jeweils eine eigene Zielfunktion auf. Der Agent ist ausgebildet, durch sein Verhalten die Zielfunktion zu maximieren oder minimieren. Somit agiert der Agent eigenständig und unabhängig von anderen Agenten. Jeder Agent verfolgt durch Optimierung der Zielfunktion über die Zeit somit jeweils eine eigene Zielsetzung. Besonders vorteilhaft verfügt zumindest ein Agent über die Fähigkeit, Szenarien in die Zukunft zu planen. Somit lässt sich optimal abschätzen ob eine Bedrohungslage vorliegt und wie diese optimal beseitigt werden kann.

Das Verhalten der Agenten ist insbesondere als Markov-Entscheidungsprozess implementiert. Jedem Agenten stehen somit in Abhängigkeit von seiner Aufgabe verschiedene Maßnahmen zur Verfügung. Jeder Agent kann unabhängig eine Maßnahme durchführen, insbesondere um seine individuelle Zielfunktion zu optimieren und/oder um die Effektbewertung zu maximieren oder minimieren.

Bevorzugt sind die Agenten ausgebildet, durch gegenseitige Delegation von Aufgaben und/oder durch Kommunikation über zumindest ein vordefiniertes Verhandlungsprotokoll und/oder durch Stigmergie zu interagieren. Die einzelnen Agenten erreichen somit ihre jeweiligen Zielsetzungen entweder durch die Delegation von Aufgaben oder gleichen in direkter Kommunikation über Verhandlungsprotokolle oder durch indirekte Kommunikation (Stigmergie) ihr Verhalten mit anderen Agenten ab. Die Wechselwirkung der Verhaltensweisen der Agenten ermöglicht, dass durch die Interaktion der Agenten ein agileres und leistungsfähigeres Gesamtsystemverhalten entsteht.

Besonders bevorzugt ist das vordefinierte Verhandlungsprotokoll zur Sicherstellung einer Integrität des Gesamtsystemverhaltens, d.h. des Verhaltens der Steuervorrichtung insgesamt. Insbesondere basiert das vordefinierte Verhandlungsprotokoll auf der Spieltheorie. Die Sicherstellung der Integrität durch spieltheoretisch motivierte InteraktionsregeIn, auch rules-of-encounter genannt, zwischen den Agenten vermeidet insbesondere, dass die Agenten malignes Verhalten erlernen. Dies bedeutet wiederum, dass ein Verhalten vermieden wird, in dem Agenten zwar ihre jeweils eigene Zielfunktion maximieren bzw. minimieren, jedoch die Leistungsfähigkeit der gesamten Steuervorrichtung beeinträchtigen, beispielsweise indem ein Agent bewusst fehlerhafte oder falsche Informationen an andere Agenten sendet, um diese zu einem Verhalten zu verleiten das die eigene Zielfunktion maximiert.

Zumindest einer der Agenten, bevorzugt jeder Agent, weist vorteilhafterweise ein neuronales Netz auf. Die eingesetzten Netztypen weisen vorteilhafterweise Strukturen auf, die ein Kurzzeitgedächtnis und/oder ein Langzeitgedächtnis implementieren. Solche Netze ermöglichen ein Trainieren des jeweiligen Agenten auf eine sog. state-value oder stateaction-value Funktion hin, die von einem Markov-Entscheidungsprozessen benötigt werden um hinsichtlich der Zielfunktion optimale Entscheidungen treffen zu können. Das Verhalten, das der jeweilige Agent erlernt, basiert insbesondere auf äußeren Einflussfaktoren.

Zumindest einer der Agenten, bevorzugt jeder Agent, weist vorteilhafterweise ein neuronales Netz mit Langzeitspeicher auf. Besonders vorteilhaft weist das neuronale Netz eine oder mehrere rekurrente oder Extended Hopfield-arige Schichten und/oder ein Sparse Distributed Memory und/oder eine Neural Turing Architektur und/oder eine anderweitige neuronale Architektur mit mindestens einem Schreibkopf und/oder Lesekopf auf.

Ebenso ist zusätzlich oder alternativ vorgesehen, dass eine Feuerleitfunktionalität der Steuervorrichtung durch ein rekurrentes Neuronalnetz oder ein Neuronalnetz mit mindestens einer Extended Hopfield Schicht oder bezüglich ihres Trainingsverfahrens und ihres Updateverhaltens vergleichbare Schichten implementiert ist.

Diese Vorkehrungen, insbesondere die genannten Schichten, realisieren im Agenten ein Kurzfrist- und Langfristgedächtnis, d.h. der jeweilige Agent verfügt über ein Erinnerungsvermögen, dass es dem Agenten ermöglicht Aufgabenstellungen zu lösen die aus mathematischer Sicht zur wesentlichen schwieriger zu lösenden Klasse der sog. parziell beobachtbare Markov Enscheidungsprozesse ("partially observable markov-processes" POMDP) oder Entscheidungsprozesse mit zeitkontinuierlichen, variablen Rücksprungpunkten (oft als "semi-MDP" bezeichnet) gehören, bei der die Markov-Eigenschaft aus der historischen Entwicklung der Situation rekonstruiert werden muss.

Auf diese Weise können insbesondere auch langsam einlaufende Meldungen und Meldungen mit zeitlicher Verzögerung aus externen Aufklärungsstellen unmittelbar in den Systementscheidungen berücksichtigt werden.

Die bevorzugte Ausprägung der Feuerleitfunktionalität als, mit den oben beschriebenen Neuronalnetzarchitekturen implementierten, (PO-)MDP ermöglicht die Fähigkeit, eine über kinematische Daten, d.h. über das klassische Verfolgen von Objekten, hinausgehende Antizipation des Flugverhaltens von Objekten auf Basis des Flugobjekt-Typs und seines bisher beobachteten Verhaltens. Die beschriebenen Netzarchitekturen enkodieren dabei die durch Beobachtung gestützte Schätzung latenter Variablen, die Aspekte wie Intention und Ausrüstung des Gegners repräsentieren und damit auf typische taktische Verhaltensmuster schließen lassen. Dadurch lassen sich insbesondere "track-verluste" und in Folge Munitionsverbrauch reduzieren.

Bevorzugt ist vorgesehen, dass zumindest ein Agent ein neuronales Netz mit zumindest einer Meta-Lern Vorrichtung, wie multiplikative Gewichtungs-Overlays, historische Reward-Werte als Eingangsvariable, Overlay durch ein zeitversetzt oder mit geringerer Updatefrequenz aktualisiertes zweites Neuronalnetz aufweist. Besonders vorteilhaft ist vorgesehen, dass die Meta-Lern Vorrichtung dergestalt ausgebildet ist, dass ein separates Lernverfahren existiert, mit dem der Agent nach dem regulären Basistraining und somit während der Einsatzphase an eine sich verändernde Umgebung adaptiert, so dass die kumulative Effektbewertung und/oder der kumulative Reward der Reward-Funktion über die Zeit maximiert oder minimiert wird.

Bevorzugt ist zumindest einer der Agenten, insbesondere der Sensormanagement-Agent, ausgebildet, durch kontrollierte Exploration und/oder durch Meta-Lernen und/oder Zero-Shot Lernen während der Trainingsphase unbekannte gegnerische Emittertypen und/oder Betriebsmodi in der Einsatzphase zu detektieren und/oder klassifizieren. Solche unbekannten Betriebsmodi sind insbesondere geheim gehaltene Betriebsmodi, die nur als Reserve vorgehalten werden, um zu verhindern, dass im Vorfeld bereits Maßnahmen zum Abwehr getroffen werden. Somit kann ein Agent sein Verhalten auch an einen solchen geheimen und daher dem Agenten aufgrund des Trainings unbekannten Betriebsmodus anpassen.

Bevorzugt ist außerdem vorgesehen, dass zumindest ein Agent, insbesondere der Sensormanagement-Agent, ausgebildet ist, durch kontrollierte Exploration und/oder Meta-Lernen in der Einsatzphase nach der Trainingsphase seine Steuerregeln zu adaptieren und/oder angepasste Taktiken zu entwickeln, die ein gegnerisches System zum Einsatz von Betriebsmodi provozieren, die dem Sensormanagement-Agent unbekannt sind, und/oder dem Sensormanagement-Agent unbekannte Emittertypen und/oder Betriebsmodi effektiv zu stören oder zu täuschen.

Grundsätzlich ist zunächst eine Trainingsphase von einer Einsatzphase zu unterscheiden. In der Trainingsphase erlernen die Agenten ihr Verhalten anhand von Trainingsdaten, sodass die Agenten dieses Verhalten in der Einsatzphase anwenden können Neben dem regulären Trainingsbetrieb, der vor dem Einsatz insbesondere durch Verwendung interaktiver Simulatoren erfolgt, sind die eingesetzten Neuronalnetz-Architekturen und ihre Lernverfahren bevorzugt so ausgeprägt, dass auch eine Adjustierung der effektiv zur Entscheidungsfindung relevanten Gewichtungen zur Laufzeit möglich ist. Dies erfolgt bevorzugt durch zwei voneinander unabhängige Vorkehrungen, von denen erstere in der Netzarchitektur repräsentiert ist und z.B. durch separate auto-encoder und/oder multiplikative overlays die Auswirkung mittelfristige und/oder längerfristige Driften und/oder plötzliche Veränderungen von Umgebungsbedingungen auf die Entscheidungsstruktur kompensiert. Die zweite Vorkehrung bezieht sich auf ein Reinforcement Lernverfahren das genutzt wird um eine optimierte Strategie zu erlernen wann und wie das Neuronalnetz aktualisiert werden muss (optimierter Einsatz von "policy improvement operatoren"), um den inkrementellen Langzeitzuwachs des Belohnungssignals zu maximieren. Kumulativ ergibt sich daraus ein System, das in erster Linie nicht ein spezifisches strategisches/taktisches Verhalten erlernt, sondern erlernt wie eine im regulären Trainingsbetrieb entwickelte Basisstrategie zur Laufzeit/Einsatzzeit an Umgebungsbedingungen angepasst werden muss, um eine langfristig stabile und erfolgreiche Einsatzstrategie zu erhalten, das System im Rahmen vorgegebener Leitregeln zu halten und Leistungseinbußen zu vermeiden. Dies wird als "Meta-Lernen" bezeichnet.

Bevorzugt ist zumindest einer der Agenten ausgebildet, durch direkte Beobachtung einer Flugbahn (Trajektorie) eigener Munition, insbesondere Leuchtspurmunition, verbesserte Feuerleitdaten für den Effektor zu berechnen oder zu optimieren. Gemäß dem Stand der Technik werden Wetterdaten wie Windgeschwindigkeit, Windrichtung, Temperatur, Luftfeuchtigkeit, Luftdruck, oder ähnliches vom Bediener in den Feuerleitrechner eingegeben oder per Datenübertragung eingespielt, um dem Feuerleitrechner eine Adjustierung von Vorhalt und Aufsatz zu ermöglichen, so dass, das Projektil beeinflussende Umweltfaktoren kompensiert werden können. Stand der Technik ist auch, dass diverse Proxygrößen, wie z.B. die am Rohrausgang vorliegende Geschossgeschwindigkeit v0 gemessen und dem Feuerleitrechner bereitgestellt werden. All diese Daten stellen wichtige Rahmenbedingungen für die Kompensationsrechnung dar, decken jedoch die Umgebungsbedingungen und/oder Umgebungseinflüsse entlang der tatsächlichen Trajektorie nur unvollständig ab. In der Praxis wird dabei in regelmäßigen Abständen Leuchtspurmunition verschossen, um einem menschlichen Richtschützen eine Feinjustierung anhand der so direkt beobachteten Trajektorie zu ermöglichen. Bevorzugt ist hierzu eine aus rekurrenten Neuronalnetzen und/oder Extended Hopfield Schichten gebildete Subkomponente vorhanden, die automatisch Leuchtspurtrajektorien beobachtet, analysiert und enkodiert (auto-encoder) zur Verfügung stellt, so dass die Steuervorrichtung die bisher vom Richtschützen durchgeführte Feinjustierung im Unterschied zum Stand der Technik systematisch und automatisch durch direkte Beobachtungsdaten berechnen kann. Dies ermöglicht eine Speicherung und Codierung der während eines Schusses wahrscheinlichsten Umgebungsbedingungen, die notwendig sind um eine Feuerleitrechnung zu optimieren und die Trefferwahrscheinlichkeit zu steigern. Letzteres reduziert in der Praxis erneut den Munitionsverbrauch, was insbesondere bei beweglichen Luftabwehrsystemen von erheblicher Bedeutung ist.

Analog zur Optimierung des physischen Ressourcenverbrauchs wie z.B. Munition durch die oben beschriebenen Architekturen und Verfahren lässt sich mit denselben Architekturen und Verfahren bevorzugt auch der Ressourceneinsatz der Sensorik optimieren. Insbesondere die Nutzung der Sensorressourcen zur Koordination der Störung gegnerischer Sensorsysteme beruht auf denselben Wirkprinzipien, wobei hier statt Richtwinkel und Munitionsauswahl nun Aspekte wie Sendeleistung und Signalmodulierung vom System gesteuert werden.

Gemäß dem Stand der Technik ist in letzterem Bereich der Einsatz von Neuronalen Netzen unterschiedlicher Typen zur Klassifizierung und Bestimmung gegnerischer Emittertypen ("cognitive electronic warfare") bekannt. Die Bestimmung von elektronischen Angriffsmaßnahmen und/oder Gegenmaßnahmen wird in produktiven Systemen meist regelbasiert umgesetzt. In der Forschung sind Ansätze bekannt, bei denen die Gegenmaßnahmen ebenfalls mit MDP artigen bzw. Reinforcement Learning Ansätzen berechnet werden. Die Erfindung geht in bevorzugten Ausgestaltungen über diese Ansätze jedoch in folgenden Punkten hinaus:
Einerseits werden Langzeit-Memorystrukturen (Extended Hopfield Layer und Sparse Distributed Memory) genutzt um nicht nur unmittelbare Maßnahmen und Gegenmaßnahmen reaktiv zu berechnen, sondern längere taktische Signalsequenzen zu planen, die z.B. dazu dienen den Gegner zur Nutzung eines sog. Wartime Reserve Modes zu provozieren. Wartime Reserve Modes sind spezielle Betriebsmodi aktiver militärischer Sensoren, die üblicherweise streng geheim gehalten werden um in einem tatsächlichen Konfliktfall die Klassifizierung und Störung durch den Gegner zu vermeiden.

Zum Zweiten werden die oben beschriebenen Meta-Learning Verfahren genutzt, um zur Laufzeit/Einsatzzeit Angriffsstrategien und/oder Gegenstrategien für bis dato unbekannte Wartime Reserve Modes zu erlernen. Das System lernt dabei im regulären Trainingsprozess also nicht eine Angriffsstrategie und/oder Gegenstrategie, sondern eine Meta-Strategie, konkret eine Suchstrategie wie zur Laufzeit eine optimale Angriffsstrategie und/oder Gegenstrategie gefunden werden kann. Die ist im Stand der Technik nicht möglich und stellt einen erheblichen Vorteil gegenüber bestehenden Ansätzen dar, speziell hinsichtlich des erwarteten gegnerischen Einsatzes von "software-defined radio" Technologien.

Drittens ist das Zusammenwirken von Sensorik, Electronic Warfare und physischer Effektorik vorgesehen: Ein Merkmal der Erfindung gemäß einer vorteilhaften Ausgestaltung ist die Integration von Sensor, Electronic Warfare Fähigkeit und physischer Effektorik in einem, durch den beschriebenen Multi-Agenten-Ansatz und seiner Interaktionsmechanismen realisierten emergenten Wirkverbund von Agenten. Eine Integration dieser Komponenten ist mit aktuellem Stand der Technik zwar ebenfalls gegeben; diese folgt aber einerseits dem OODA Prinzip und implementiert andererseits in diesem Zusammenhang einen vordefinierten Ablaufprozess (workflow), der in der Praxis zu einem schematischen und für einen Gegner vergleichsweise leicht vorhersagbaren Verhalten führt. Das durch den beschriebenen Multi-Agenten-Ansatz und seiner Interaktionsmechanismen realisierte Systemverhalten ist (im Rahmen vordefinierter Einsatzgrenzen) im Gegensatz dazu in der Lage situativ die vollständige Bandbreite kombinatorischer Möglichkeiten aus Sensor und Effektorfähigkeiten zu wählen um optimale Aktionssequenzen gegen einen Angreifer darzustellen.

Die Erfindung betrifft außerdem ein Waffensystem. Das Waffensystem weist zumindest einen Umgebungssensor und zumindest einen Effektor auf, wobei der Effektor physikalisch disloziert platziert werden kann. Weiterhin weist das Waffensystem eine Steuervorrichtung wie zuvor beschrieben auf. Der Umgebungssensor ist über die Eingangsschnittstelle und der Effektor über die Ausgangsschnittstelle mit der Steuervorrichtung gekoppelt. Durch die Agenten der Steuervorrichtung kann das Waffensystem rasch und optimal Bedrohungen erkennen und abwenden. Das Waffensystem ist insbesondere ein Flugabwehrsystem. Mehrere solcher Flugabwehrsysteme können bevorzugt über die zuvor beschriebenen Interaktionsmechanismen flexibel und ad-hoc zu System-Verbünden zusammengeschlossen werden. Solche Verbünde müssen nicht mehr über eine zentrale Command und Control Komponente gesteuert werden und können die jeweiligen Spezialfähigkeiten der einzelnen Systeme optimal nutzen, ohne dass eine zentrale Command und Control Komponente diese Fähigkeiten explizit kennen müsste. Nach Ausfällen einzelner Systeme kann sich der Verbund automatisch reorganisieren und regruppieren und kann außerdem bisher nicht oder nur mit hohem Aufwand realisierbare Taktiken implementieren. Ein Beispiel ist etwa die Möglichkeit, dass nur eines der Waffensysteme mit aktiver Sensorik arbeitet, seine Sensordaten aber allen anderen Waffensysteme im Verbund zur Verfügung stellt, wobei die anderen Waffensysteme das abstrahlende System zusätzlich zur eigenen Effektorik schützen. Derartige Konstellationen mussten bisher explizit festgelegt und über eine zentrale Command und Control Komponente koordiniert werden. Die Steuervorrichtungen der Waffensysteme ermöglichen dagegen den ad-hoc Aufbau, dementsprechend die ad-hoc Veränderung der Konstellation und damit, in Verbindung mit der Beweglichkeit der Einzelsysteme einen in der Praxis nur schwer aufzuklärenden, sich kontinuierlich reorganisierenden Sensor-Effektor-Verbund.

Weiterhin betrifft die Erfindung ein Verfahren zum Trainieren der Agenten. Dieses Trainieren hat das Ziel, die Verhaltensweisen der jeweiligen Agenten zu optimieren. Das Training erfolgt mittels Multi-Agent Reinfocement Learning oder Stigmergic Independent Reinforcement Learning, wodurch die Agenten in simulierten Situationen Verhaltensweisen erlernen, die die Effektbewertung und/oder eine jeweilige Zielfunktion der Agenten maximieren oder minimieren. Die computergestützte Adaption/Training des oben bezeichneten Luftabwehrsystems nach Methoden des Multi-Agent Reinfocement Learning (MARL) oder Stigmergic Independent Reinforcement Learning (SIRL), d.h. die Systeme erlernen in simulierten Situationen Verhaltensweisen, auch policies genannt, die die jeweilige Zielfunktion des einzelnen Agenten maximieren oder minimieren und gleichzeitig zur Leistungssteigerung der gesamtem Steuervorrichtung beitragen (System-Training). Besonders vorteilhaft ist die Nutzung eines durch supervised machine-learning trainierten externen Zielfunktionsanteils, das eine hohe Anzahl simulierter und echter Luftlageszenarien auswertet um die Auswirkung der aktuellen Situation auf die Erfolgswahrscheinlichkeit des Gesamtszenarios zu codieren.

Bevorzugt wird eine interaktive Simulationsumgebung bereitgestellt, bei der abwechselnd die Verhaltensweisen der Agenten als Verteidigungssystem und eine Logik eines Angreifers trainiert werden. Dadurch lässt sich eine Verbesserung der Verhaltensweisen der Agenten erreichen. Das Trainingssystem zur Erzeugung der Systemlogik des o.g. Systems findet in einer interaktiven in-process Simulationsumgebung statt, bei der abwechselnd, insbesondere abwechselnd nach einer festgelegten Anzahl von Trainingsepochen, die Systemlogik der Agenten, d.h. des Verteidigungssystems, und die Logik des potenziellen Angreifers trainiert werden. Auf diese Weise können beide Systeme kontinuierlich ihre Strategien und Taktiken verbessern und die Agenten lernen sich auf Gegner mit steigenden taktischen Fähigkeiten einzustellen.

Außerdem wird der zumindest eine Sensormanagement-Agent bevorzugt mittels Verhandlungsprotokollen und/oder Multiagenten-Lernen auf einen Kompromiss zwischen einem Erkenntnisgewinn durch einen Einsatz eines aktiven Sensors und dem damit einhergehenden Entdeckungsrisiko trainiert. Somit erlernt der Agent Emission Control Strategien. Wird der aktive Sensor verwendet, so besteht ein höheres Risiko, dass das Waffensystem entdeckt wird, je länger der aktive Sensor in Betrieb ist. Gleichzeitig verbessert sich aber Informationslage. Ein notwendiger Kompromiss wird während des Trainings ermittelt bzw. festgelegt.

Ein Training der Agenten erfolgt vorteilhaft mittels probabilistischer Sensormodelle und/oder Schadensmodelle. Besonders vorteilhaft werden die probabilistischen Modelle mit zusätzlichem Rauschen beaufschlagt, um robuste Kontrollstrategien zu erreichen. Durch den Einsatz probabilistische Sensormodelle und/oder Schadensmodelle werden beschleunigte Abspielzeiten simulierter Szenarien ermöglicht. Die Anpassung auf die Echtumgebung erfolgt insbesondere in zwei Schritten bei denen die Steuervorrichtung zunächst auf einem Simulator mit genaueren physikalischen Modellen mit Transferlernen" angepasst wird, bevor die Umsetzung in eine Echtumgebung erfolgt.

Die Verhaltensweisen von Agenten mehrerer Steuervorrichtungen werden bevorzugt nach dem Stigmergic Independent Reinforcement Learning Prinzip trainiert. Auf diese Weise lässt sich vorteilhaft ein Verbund verschiedener Steuervorrichtungen und damit auch ein Verbund verschiedener Waffensysteme erreichen, wobei die Steuervorrichtungen in diesen Verbünden optimal aufeinander abgestimmt sind. Insbesondere ist durch das Stigermic Independent Reinforcement Learning Prinzip erreicht, das Verhalten einer Steuervorrichtung durch Beobachtung des Verhaltens einer anderen Steuervorrichtung abzustimmen. Dies ist vorteilhaft in Situation, in denen keine Kommunikation möglich ist, beispielsweise aufgrund gegnerischer Funkstörung, auch electronic warfare genannt, und/oder aufgrund eigener Regeln kein Funkverkehr gestattet ist. Das Abstimmen der Verhaltensweisen der Steuervorrichtungen erfolgt somit auf Stigmergie, was durch das genannte Stigermic Independent Reinforcement Learning Prinzip trainiert wird.

Für eine Steuerungsstrategie des Umgebungssensors ist unter Verwendung eines Markov Entscheidungsprozesses bevorzugt ein Kurzzeitspeicher und Langzeitspeicher vorgesehen, um bisher nicht identifizierte und/oder klassifizierte Beobachtungen engmaschig überwachen zu können. Dies führt zu einer Modellierung als Partially Observable Markov Decision Process (POMDP), da die Markov Eigenschaft allein auf der letzten Beobachtung nicht garantiert werden kann. Bevorzugt ist außerdem die Implementierung von "rules-of-encounter" Protokollen zur aktiven Verhandlung von Ressourcen des Umgebungssensors als Alternative zu einer POMDP Steuerung vorgesehen: In diesem Setup wird die Sensorsteuerung selbst durch drei Agenten repräsentiert, bei denen ein Agent die Prioritätenliste zur Etablierung präziser Tracks abarbeitet ("Tracking"), ein zweiter Agent eine möglichst kontinuierliche und exhausive Abtastung ("Surveilance/Scan") Strategie implementiert und der dritte Agent die Ressourcen des Umgebungssensor an die beiden zuvor genannten Agenten auktioniert.

Die Steuervorrichtung ermöglicht den Aufbau missionsspezifisch konfigurierbarer Sensor-und-Effektor Verbünde unter Verwendung jeweils von spezialisierten Software-Agenten verwalteten Teilsystemen, die als Multi-Agenten Systeme implementiert werden. Solche Verbünde erlauben, dass die einzelnen Teilnehmer der Verbünde Dienste ihrer Agenten an andere Teilnehmer anbieten, wie z.B. die Abtastung eines Luftraumsektors in einem bestimmten Spektralbereich, die von einem anderen Teilnehmer ad-hoc bezogen werden können.

Weiterhin ermöglicht die Steuervorrichtung eine Koordination in Sensor-und-Effektor Verbünden durch auf spieltheoretischen Verfahren basierende Interaktionsprotokolle und Verhandlungsprotokolle ("rules-of-encounter"), so dass situationsbezogen und ad-hoc Ziel-Sensor-Effektor-Kombinationen aufgebaut werden können, die eine Reduzierung der "Sensor-zu-Effektor" Latenz ermöglichen und eine automatische Reorganisation des Verbundes möglich ist, falls ein Teilsystem ausfällt oder gestört oder zerstört wurde.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: ein schematisches Ablaufschema gemäß dem Stand der Technik, und
- Fig. 2: eine schematische Übersicht über ein Waffensystem gemäß einem Ausführungsbeispiel der Erfindung, und
- Fig. 3: eine schematische Ansicht der Funktionsweise einer Recheneinheit einer Steuervorrichtung des Waffensystems gemäß dem Ausführungsbeispiel der Erfindung.

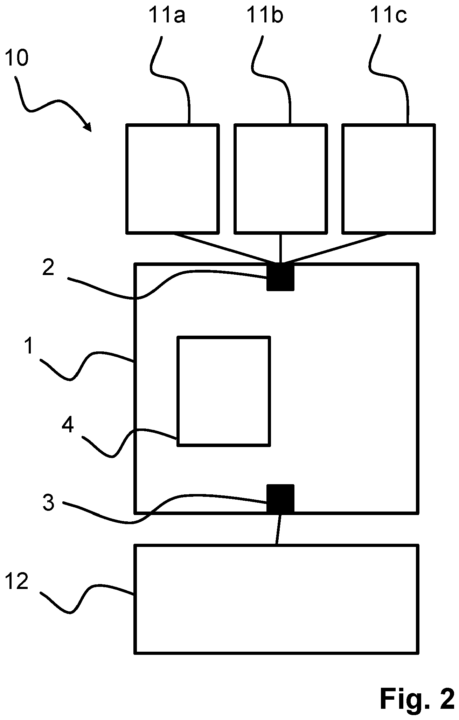

Figur 2 zeigt schematisch ein Waffensystem 10 gemäß einem Ausführungsbeispiel der Erfindung, das in diesem Beispiel ein Flugabwehrsystem ist. In dem gezeigten Ausführungsbeispiel weist das Waffensystem 10 mehrere Umgebungssensoren 11a, 11b, 11c auf, nämlich einen passiven bildgebenden Sensor 11a, der beispielsweise ein optischer Sensor bzw. ein Periskop ist, einen aktiven Radarsensor 11b mit Scan-Modus, sowie einen weiteren Radarsensor 11c der die Verfolgung von Flugzielen mit hoher Auflösung erlaubt. Der aktive Radarsensor 11b und der weitere Radarsensor 11c sind besonders vorteilhaft von ein und derselben Hardware abgebildet, wobei sich unterschiedliche Arbeitsmodi wie Scannen oder Verfolgen in unterschiedlichen Beobachtungssegmenten mittels einer Ansteuerung der Hardware ausführen lassen.

Außerdem weist das Waffensystem 10 einen Effektor 12 auf. Der Effektor 12 ist exemplarisch eine Rohrwaffe bzw. eine Flak.

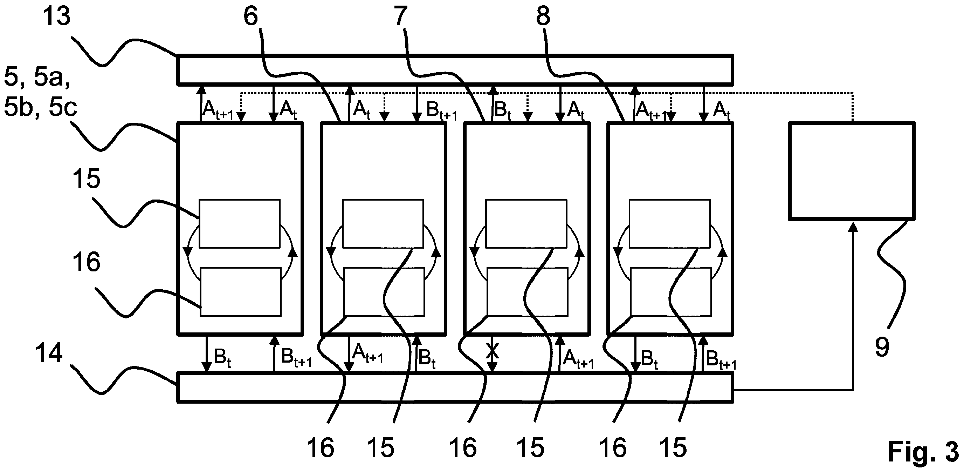

Außerdem weist das Waffensystem 10 eine Steuervorrichtung 1 auf. Die Steuervorrichtung umfasst eine Eingangsschnittstelle 2 zur Kommunikation mit den Umgebungssensoren 11a, 11b, 11c und eine Ausgangsschnittstelle 3 zur Kommunikation mit dem Effektor 12. Des Weiteren umfasst die Steuervorrichtung 1 eine Recheneinheit 4, die ausgebildet ist, mehrere verschiedene Agenten 5a, 5b, 5c, 6, 7, 8 parallel und unabhängig voneinander auszuführen, was in Figur 3 schematisch dargestellt ist..

In der exemplarischen Anordnung verfügt die Recheneinheit 4 über mehrere separate Sensormanagement-Agenten 5a, 5b, 5c. Ein erster Sensormanagement-Agent 5a steuert den passiven bildgebende Sensor 11a mit Bildanalysealgorithmen und/oder Objekterkennungsalgorithmen, beispielsweise mittels Convolutional Netze, um im Nahbereich Objekte zu detektieren und zu identifizieren. Als Bildverarbeitungsalgorithmus per se kann im Wesentlichen jedes Verfahren zur Objekterkennung auf Bildern verwendet werden. Im Rahmen des Ausführungsbeispiels der Erfindung ist vorgesehen, dass die Steuerung des passiven bildgebende Sensor 11a als Markov-Entscheidungsprozess (Markov Decision Process MDP) modelliert ist, dessen Aktionen die Blickwinkel, d.h. Azimut und Elevation, Einstellungen der optischen Vergrößerung und die Auswahl von Filtern, wie beispielsweise Infrarot, darstellen. Mit diesen Aktionen ist es Aufgabe des ersten Sensormanagement-Agenten 5a eine optimale Abfolge zu implementieren die einen Kompromiss zwischen der Entdeckungswahrscheinlichkeit bisher nicht entdeckter Objekte durch nicht-objektgebundene Abtastung der Umgebung und der genauen Identifizierung und Klassifizierung entdeckter Objekte zu berechnen. Jeder der angegebenen Aufgaben bindet dabei den passiven bildgebenden Sensor 11a für eine gewisse Zeit, so dass dieser nicht für andere Aufgaben zur Verfügung steht.

Eine optimale Steuerungsstrategie für den passiven bildgebenden Sensor 11a ist situationsbezogen und in der Lage Umgebungsfaktoren wie z.B. potenzielle Abschattungen hinter denen sich ein Objekt, z.B. ein Kampfhubschrauber verstecken kann, sowie typische Taktiken eines Gegners in diesen Umgebung zu berücksichtigen. Außerdem benötigt die Strategie Kurzzeitspeicher und Langzeitspeicher, um Beobachtungen die bisher nicht identifiziert bzw. klassifiziert werden konnten engmaschiger zu überwachen. Dies führt zunächst zur Modellierung als Partially Observable Markov Decision Process (POMDP), da die Markov Eigenschaft allein auf der letzten Beobachtung nicht garantiert werden kann. Die Implementierung wird entweder über rekurrente Neuronale Strukturen oder Strukturen des Extended Hopfield Netzes, oder einer Kombination aus beiden, durchgeführt.

Die Zielfunktion des ersten Softwaremanagement-Agenten 5a enthält einen intrinsischen Anteil, der die Güte der zugewiesenen Klassifizierungen, sowie die durchschnittliche Zeit zur Klassifizierung von Objekten misst. Die Klassifizierung wird bevorzugt als Wahrscheinlichkeitsdichte über mögliche Objektklassen angegeben wird, so dass die Wahrscheinlichkeitsmasse genutzt werden kann um z.B. die Präzision der Klassifizierung zu bestimmen. Außerdem enthält die Zielfunktion einen externen Anteil durch Effektbewertung 9, der einen Status des Waffensystems 10 bestimmt und einen Penalty-Term beinhaltet, falls angreifende Objekte einen vordefinierten zu schützenden Zielsektor erreichen konnten bzw. das Waffensystem 10 selbst beschädigt wurde.

Ein zweiter Sensormanagement-Agent 5b und ein dritter Sensormanagement-Agent 5c für die Radarsensoren 11b, 11c werden nach denselben Prinzipien implementiert. Alternativ ist lediglich ein Sensormanagement-Agent 5b, 5c für die beiden Radarsensoren 11b, 11c vorgesehen. Die Aktionen des Markov-Entscheidungsprozesses bestehen z.B. in Aspekten der Strahlsteuerung, der Steuerung emittierter Energie, sowie der Selektion der Radarbetriebsmodi. Die Zielfunktion des zweiten und dritten Sensormanagement-Agent 5b, 5c beinhaltet wiederum einen intrinsischen Anteil, der auf die durchschnittliche Trackqualität abzielt, sowie einen externen Anteil als Penalty Term wie oben beschrieben.

Die Darstellung in Figur 3 ist der besseren Übersichtlichkeit wegen vereinfacht, da hier zeichnerisch nicht unterschieden wird, ob eine Sensormanagement-Agent 5 oder mehrere Sensormanagement-Agenten 5a, 5b, 5c vorgesehen sind.

Die Recheneinheit 4 weist außerdem einen Feuerleitanteil auf. Dieser kann verschiedene Agenten 6, 7, 8 aufweisen. Insbesondere ist vorgesehen, dass ein Effektormanagement-Agent 8 vorhanden ist, der zum Ansteuern des Effektors 12 ausgebildet ist. In einer Ausgestaltung der Steuervorrichtung 1 sind lediglich zwei Agenten 5, 6, 7, 8 vorhanden. In dem in Figur 3 gezeigten Ausführungsbeispiel ist neben dem Sensormanagement-Agent 5 bzw. den Sensormanagement-Agenten 5a, 5b, 5c und dem Effektormanagement-Agent 8 ein Lageanalyse-Agent 6 zur Auswertung einer aktuellen militärischen Lage sowie ein Taktischer Planungs-Agent 7 zum Durchführen taktischer Planungen vorgesehen. Diese beiden Agenten 6, 7 dienen allein der Informationsverarbeitung und steuern weder die Umgebungssensoren 11 noch den Effektor 12.

Der Feuerleitanteil verfügt über einen Anteil zur Berechnung der Zielpriorisierung und einen Anteil zur Berechnung der Schussposition. Die Zielpriorisierung kann entweder rein reaktiv erfolgen (z.B. durch sog. pointer neural networks oder Extended Hopfield Netze) und berücksichtigt einerseits die verfügbaren Effektoren 12 mit ihrem jeweiligen Munitionsstand, sowie auch Eigenschaften der anfliegenden Objekte, die z.B. aufgrund ihrer Geschwindigkeit oder ihrer Klassifizierung hinsichtlich ihres Bedrohungspotenzials eingeschätzt und priorisiert werden können.

Die Berechnung der Schussposition ist nicht track-basiert, sondern berechnet direkt die Feuerleitparameter. Damit ist es ermöglicht im Fall eines Drohnen-Schwarmangriffs nicht einzelne Objekte ansteuern zu müssen, sondern durch Schuss auf die Zentroidposition eines Clusters zu erreichen. Außerdem ist ermöglicht Sperrfeuer zu positionieren und Zielbewegung früher antizipieren und Effektoren 12 ausrichten zu können, z.B. durch den Einsatz von "track-before-detect". Die Agenten der Feuerleitkomponente nutzen Neuronale Netze mit Speichermöglichkeit, beispielsweise rekurrente Neuronale Netze oder Extended Hopfield Architekturen, um die erwartete Flugbewegung eines Ziels zu kodieren, aber auch um die Flugbahn aktuell abgefeuerter Leuchtspurprojektile (Tracer) zu beobachten und in die Berechnung der nächsten Schussposition einfließen zu lassen. Letzteres ermöglicht die Berücksichtigung aktueller Umweltparameter zusätzlich zu statisch verfügbaren Größen wie Windgeschwindigkeit, Richtung, etc. und führt zu verringertem Munitionsverbrauch.

In Figur 3 sind exemplarisch zwei Zeitschritte gezeigt, der Zeitschritt t und der Zeitschritt t+1. Diese Zeitschritte sind äquivalent zu jeweils einem OODA loop Durchlauf im Stand der Technik. Innerhalb der jeweiligen Zeitschritte werden exemplarisch ein erster Schritt A und ein zweiter Schritt B in beliebigen Reihenfolgen durchgeführt. Jeder Agent 5, 6, 7, 8 verfügt über eine eigene Lagekodierung 16, die beispielsweise subsymbolisch über neuronale Netzstrukturen ausgeprägt ist, sowie über eine eigene Aufmerksamkeitssteuerung 15. Im Resultat sind damit Rückkopplungen zwischen den Agenten 5, 6, 7, 8 jederzeit möglich. Beispielsweise stehen Information der Effektorsteuerung (vergleichbar zu Decide und Act in der OODA Loop) allen Agenten 5, 6, 7, 8 sofort zur Verfügung. Wichtige Entscheidungen, wie z.B. eine Repriorisierung eines Sensoreinsatzes oder der Zielzuweisung bei Änderung können damit noch innerhalb eines Zeitschrittes t, t+1 erfolgen. Das Gesamtsystem optimiert eine gemeinsame Zielfunktion durch die Effektbewertung 9. Jeder Agent 5, 6, 7, 8verfolgt bevorzugt zusätzlich eine lokale Zielfunktion.

Es ist vorgesehen, dass jeder Agent 5, 6, 7, 8 über eine eigene Ablaufschleife verfügt, über der er Informationen aufnimmt, die über einen gemeinsamen Datenbereich bzw. über Netzwerkkommunikation mit anderen Agenten 5, 6, 7, 8, 9 ausgetauscht werden bzw. die Übernahme von Aufgaben verhandelt. Dies erfolgt insbesondere über indirekte Kommunikation 14 mittels Datenaustausch und/oder Stigmergie-Koordination sowie durch direkte Kommunikation 13 über vordefinierte Verhandlungsprotokolle und/oder über Aufgabenauktionierung und/oder über Delegation. Dies führt insbesondere dazu, dass die Verarbeitung nicht Reihe abgearbeitet wird, d.h. Die Agenten müssen nicht auf das Ergebnis eines anderen Agenten warten. Eine Synchronisation erfolgt nur zum Schreiben und Lesen, wodurch pro Zeitschritt t, t+1 nur Leseoperationen oder Schreiboperationen in Reihe ausgeführt werden.

Somit ist in der Recheneinheit 4 das Zusammenwirken der einzelnen Agenten 5, 6, 7, 8 vorgesehen, wobei ein Training der Agenten 5, 6, 7, 8 zum Erlernen ihrer Verhaltensweisen bzw. policies nach Multi-Agent-Reinforcement Lernverfahren erfolgt. Dabei kommt speziell dem gemeinsamen externen Anteil der Zielfunktion eine spezielle Bedeutung zu, da dieser aufgrund der Effektbewertung 9 den teilsystemunabhängigen Anteil des jeweiligen Agentenverhaltens an der Zielerreichung des Waffensystems 10 codiert. Somit erfolgt insbesondere eine "Attributierung" des Verhaltens eines Agenten 5, 6, 7, 8 am Gesamtsystemerfolg oder Misserfolg. Insbesondere erfolgt durch den externen Anteil eine Bewertung von Aktionen, der Agenten 5, 6, 7, 8 die z.B. zu einer Gefährdung des gesamten Waffensystems 10 führen können, beispielsweise durch Emission eigener Sensorik, die zwar zu einer verbesserten Lagebeurteilung, gleichzeitig aber zum Entdeckungsrisiko durch gegnerische elektronische Aufklärung führt.

Während die Teilsysteme eines Luftabwehrsystems gemeinsam trainiert werden, wird eine Verschaltung mit anderen Luftabwehrsystemen zu einem Verbund bevorzugt über auktionsbasierte Interaktionsprotokolle realisiert ("rules-of-encounter").

Zum Trainieren der Agenten 5, 6, 7, 8 der Recheneinheit 4 erfolgt insbesondere die Nachbildung der wesentlichsten physikalischen Gegebenheiten durch vereinfachte, probabilistische Modelle in einem Trainingssystem, um eine schnelle Durchlaufzeit von Szenarien zu ermöglichen. Ein Simulator wird dabei als in-process Simulator ausgeprägt, d.h. dieser ist direkt in die Prozesse der zu trainierenden Steuervorrichtung 1 verlinkt und verfügt zur Vermeidung von Kommunikationslatenz und unnötigen Berechnungen bevorzugt über keine Visualisierung. Die Sensorcharakteristika der Umgebungssensoren 11 werden über probabilistische Modelle abgebildet. Ebenso die Effekte der Waffensysteme 10 auf beteiligte Plattformen. Das Trainingssystem bildet initial eine "direct policy search" Methode ab, in der die freien Parameter aller Agenten 5, 6, 7, 8 gleichzeitig bestimmt werden. Dabei werden initial die Steuervorrichtungen 1 gegen aufgezeichnete oder über Skripte festgelegte und im Vorfeld computerunterstützt variierte Szenarien trainiert. Zeigen sich erste Anzeichen für eine Konvergenz hinsichtlich der erreichten Leistungsfähigkeit, d.h. der Auswertung der Zielfunktion, werden die Parameter konstant gehalten und es werden Strategien eines Angreifers trainiert, um die bisher gelernte Abwehrstrategie zu umgehen. Im weiteren Verlauf wird, sobald die Angreifertaktik verbessert wurde, wieder auf ein Training der Abwehrsysteme umgeschaltet. Der Zyklus widerholt sich bis keine nennenswerten Verbesserungen mehr erzielbar sind.

Im Anschluss erfolgt bevorzugt ein Austausch der probabilistischen Sensormodelle durch höherauflösende physikalische Sensormodelle in einer vernetzen Simulationsumgebung. Die Verhaltensweisen der Agenten 5, 6, 7, 8 werden insbesondere durch Transfer-Lernen adjustiert.

Neben der vorstehenden schriftlichen Beschreibung der Erfindung wird zu deren ergänzender Offenbarung hiermit explizit auf die zeichnerische Darstellung der Erfindung in Figur 2 und Figur 3 Bezug genommen.

### Bezugszeichenliste

- 1: Steuervorrichtung
- 2: Eingangsschnittstelle
- 3: Ausgangsschnittstelle
- 4: Recheneinheit
- 5: Sensormanagement-Agent
- 5a: erster Sensormanagement-Agent
- 5b: zweiter Sensormanagement-Agent
- 5c: dritter Sensormanagement-Agent
- 6: Lageanalyse-Agent
- 7: taktischer Planungs-Agent
- 8: Effektormanagement-Agent
- 9: Effektbewertung
- 10: Waffensystem
- 11: Umgebungssensor
- 11a: passiver bildgebender Sensor
- 11b: Radarsensor
- 11c: weiterer Radarsensor
- 12: Effektor
- 13: direkte Kommunikation
- 14: indirekte Kommunikation
- 15: Aufmerksamkeit
- 16: Lagekoordinierung

- 100: Beobachten
- 200: Bewerten
- 300: Entscheiden
- 400: Handeln

## Patentansprüche

1. Steuervorrichtung (1) eines Waffensystems (10) aufweisend
• eine Eingangsschnittstelle (2) zur Kommunikation mit zumindest einem Umgebungssensor (11) und/oder zum Empfangen von Eingangsdaten,
• eine Ausgangsschnittstelle (3) zur Kommunikation mit zumindest einem Effektor (12), und
• eine Recheneinheit (4),
• wobei die Recheneinheit (4) ausgebildet ist, mehrere verschiedene Agenten (5, 6, 7, 8) parallel und unabhängig voneinander auszuführen, wobei die Agenten (5, 6, 7, 8) umfassen
∘ zumindest einen Sensormanagement-Agent (5) ausgebildet zum Ansteuern eines über die Eingangsschnittstelle verbundenen Umgebungssensors (11), und/oder
∘ zumindest einen informationsverarbeitenden Agenten (6, 7) ohne zugeordnete zu steuernde Komponenten, und/oder
∘ zumindest einen Effektormanagement-Agent (8) ausgebildet zum Ansteuern eines über die Ausgangsschnittstellt (3) verbundenen Effektors (10),
• wobei die Recheneinheit (4) außerdem ausgebildet ist, eine Effektbewertung (9) durchzuführen und das Ergebnis den Agenten (5, 6, 7, 8) zur Verfügung zu stellen, und
• wobei die Agenten (5, 6, 7, 8) ausgebildet sind, durch ihr Verhalten die Effektbewertung (9) zu maximieren oder minimieren.

2. Steuervorrichtung (1) nach Anspruch 1, **dadurch gekennzeichnet, dass** zumindest ein Agent jeweils eine eigene Zielfunktion aufweist und ausgebildet ist, durch sein Verhalten die Zielfunktion zu maximieren oder minimieren.

3. Steuervorrichtung (1) nach einem der vorhergehenden Ansprüche, **dadurch gekennzeichnet, dass** das Verhalten der Agenten als Markov-Entscheidungsprozess implementiert ist.

4. Steuervorrichtung (1) nach einem der vorhergehenden Ansprüche, **dadurch gekennzeichnet, dass** die Agenten ausgebildet sind, durch gegenseitige Delegation von Aufgaben und/oder durch Kommunikation über zumindest ein vordefiniertes Verhandlungsprotokoll und/oder durch Stigmergie zu interagieren, wobei das vordefinierte Verhandlungsprotokoll bevorzugt zur Sicherstellung einer Integrität des Verhaltens der Steuervorrichtung (1) vorgesehen ist und insbesondere auf der Spieltheorie basiert.

5. Steuervorrichtung (1) nach einem der vorhergehenden Ansprüche, **dadurch gekennzeichnet, dass** zumindest ein Agent (5, 6, 7, 8) ein neuronales Netz mit Langzeitspeicheraufweist.

6. Steuervorrichtung (1) nach einem der vorhergehenden Ansprüche, **dadurch gekennzeichnet, dass** eine Feuerleitfunktionalität der Steuervorrichtung (1) durch ein rekurrentes Neuronalnetz und/oder ein Neuronalnetz mit Extended Hopfield und/oder bezüglich ihres Trainingsverfahrens und ihres Updateverhaltens vergleichbare Schichten implementiert ist.

7. Steuervorrichtung (1) nach einem der vorhergehenden Ansprüche, **dadurch gekennzeichnet, dass** zumindest ein Agent (5, 6, 7, 8) ein neuronales Netz mit Meta-Lern Vorrichtungen aufweist.

8. Steuervorrichtung (1) nach Anspruch 7, **dadurch gekennzeichnet, dass** die Meta-Lern Vorrichtung dergestalt ausgebildet ist, dass ein separates Lernverfahren existiert, mit dem der Agent nach dem regulären Basistraining und somit während der Einsatzphase an eine sich verändernde Umgebung adaptiert, so dass die kumulative Effektbewertung (9) über die Zeit maximiert oder minimiert wird.

9. Steuervorrichtung (1) nach einem der vorhergehenden Ansprüche, **dadurch gekennzeichnet, dass** zumindest ein Agent (5, 6, 7, 8) ausgebildet ist, durch kontrollierte Exploration und/oder durch Meta-Lernen und/oder Zero-Shot Lernen während der Trainingsphase unbekannte gegnerische Emittertypen und/oder Betriebsmodi in der Einsatzphase zu detektieren und/oder klassifizieren.

10. Steuervorrichtung (1) nach einem der vorhergehenden Ansprüche, **dadurch gekennzeichnet, dass** zumindest ein Agent (5, 6, 7, 8) ausgebildet ist, durch kontrollierte Exploration und/oder Meta-Lernen in der Lage ist, in der Einsatzphase nach der Trainingsphase seine Steuerregeln zu adaptieren und/oder angepasste Taktiken zu entwickeln, die ein gegnerisches System zum Einsatz von Betriebsmodi provozieren, die dem Sensormanagement-Agent (5) unbekannt sind, und/ oder dem Sensormanagement-Agent (5) unbekannte Emittertypen und/oder Betriebsmodi effektiv zu stören oder zu täuschen.

11. Steuervorrichtung (1) nach einem der vorhergehenden Ansprüche, **dadurch gekennzeichnet, dass** zumindest einer der Agenten (5, 6, 7, 8) ausgebildet ist, durch Beobachtung einer Flugbahn eigener Munition, insbesondere Leuchtspurmunition, Feuerleitdaten für den Effektor zu berechnen oder zu optimieren.

12. Waffensystem (10) aufweisend zumindest einen Umgebungssensor (11) und zumindest einen Effektor (12) sowie eine Steuervorrichtung (1) nach einem der vorhergehenden Ansprüche, wobei der Umgebungssensor (11) über die Eingangsschnittstelle (2) und der Effektor (12) über die Ausgangsschnittstelle (3) mit der Steuervorrichtung (1) gekoppelt ist.

13. Verfahren zum kombinierten Trainieren der Agenten (5, 6, 7, 8) durch Multi-Agent Reinfocement Learning oder Stigmergic Independent Reinforcement Learning, wodurch die Agenten (5, 6, 7, 8) in simulierten Situationen Verhaltensweisen erlernen, die die Effektbewertung (9) und/oder eine jeweilige Zielfunktion der Agenten (5, 6, 7, 8) maximieren oder minimieren.

14. Verfahren nach Anspruch 13, **dadurch gekennzeichnet, dass** eine interaktive Simulationsumgebung bereitgestellt wird, bei der abwechselnd die Verhaltensweisen der Agenten (5, 6, 7, 8) und eine Logik eines Angreifers trainiert werden, eine Verbesserung der Verhaltensweisen der Agenten (5, 6, 7, 8) zu erreichen.

15. Verfahren nach Anspruch 13 oder 14, **dadurch gekennzeichnet, dass** der zumindest eine Sensormanagement-Agent (5) mittels Verhandlungsprotokollen und/oder Multiagenten-Lernen auf einen Kompromiss zwischen einem Erkenntnisgewinn durch einen Einsatz eines aktiven Sensors und dem damit einhergehenden Entdeckungsrisiko trainiert wird.

16. Verfahren nach einem der Ansprüche 13 bis 15, **dadurch gekennzeichnet, dass** ein Training der Agenten (5, 6, 7, 8) mittels probabilistischer Sensormodelle und Schadensmodelle erfolgt, wobei die probabilistischen Modelle insbesondere mit zusätzlichem Rauschen beaufschlagt werden, um robuste Kontrollstrategien zu erreichen.

17. Verfahren nach einem der Ansprüche 13 bis 16, **dadurch gekennzeichnet, dass** die Verhaltensweisen von Agenten (5, 6, 7, 8) mehrerer Steuervorrichtungen (1) nach dem Stigermgic Independent Reinforcement Learning Prinzip trainiert werden, um das Verhalten einer Steuervorrichtung (1) durch Beobachtung des Verhaltens einer anderen Steuervorrichtung (1) abzustimmen.
